# FASCICULE DE BREVET EUROPEEN

(11) **EP 3 655 633 B1**
(45) Date de publication et mention de la délivrance du brevet: **04.08.2021**
(21) Numéro de dépôt: 18735671.2
(22) Date de dépôt: 12.06.2018
(51) Int. Cl.: F01N 3/10, F01N 9/00, F01N 11/00, F01N 3/021, F01N 3/023, F01N 13/00, F02D 41/14, F02D 43/00

(54) **PROCÉDÉ DE LANCEMENT D'UNE RÉGÉNÉRATION D'UN FILTRE À PARTICULES**
VERFAHREN ZUR DURCHFÜHRUNG EINER PARTIKELFILTERREGENERATION
PROCESS OF STARTING A PARTICULATE FILTER REGENERATION

(30) Priorité: 19.07.2017 FR 1756835
(43) Date de publication de la demande: 27.05.2020
(73) Titulaire: PSA Automobiles SA, 78300 Poissy (FR)
(72) Inventeur: DILLENSCHNEIDER, Julie, 78450 Villepreux (FR); KARAGEORGIOU, Dimitrios, 92500 Rueil Malmaison (FR); DAMBRICOURT, Frederic, 78600 Maisons Laffitte (FR); GOGO, Matthieu, 92800 Puteaux (FR)
(86) Numéro de dépôt international: PCT/FR2018/051357
(87) Numéro de publication internationale: WO 2019/016437

(56) Documents cités:
- EP-A1- 2 216 521
- WO-A1-03/025355
- WO-A1-2011/067518
- FR-A1- 2 963 641
- US-A1- 2005 016 137
- US-A1- 2017 159 522

## Description

La présente invention concerne un procédé de lancement de régénération dite dysfonctionnelle d'un filtre à particules dans un groupe motopropulseur à motorisation à allumage commandé.

Les normes anti-pollution à venir, notamment en Europe avec la prochaine application de la réglementation émissions Euro 6 2^{ème} étape, durcissent fortement le seuil à respecter pour les particules émises par les motorisations à allumage commandé à Injection Directe ou puis plus tard à injection indirecte.

Le respect d'une telle réglementation pourrait imposer d'utiliser un filtre à particules dans la ligne d'échappement de tels moteurs. Un tel filtre à particules pour des motorisations à allumage commandé fonctionnant avec un carburant du type essence, aussi communément appelé GPF pour la dénomination anglaise de « Gasoline Particle Filter », c'est-à-dire de filtre à particules pour carburant essence, ci-après dénommé filtre à particules essence, est relativement similaire à ceux utilisés pour les motorisations Diesel mais ses caractéristiques sont adaptées afin de ne pas pénaliser les performances ou la consommation.

Une ligne d'échappement comprend un conduit de circulation des gaz d'échappement équipé d'organes de traitement chimique et/ou physique des gaz d'échappement, par exemple à la sortie d'un moteur thermique à allumage commandé, un catalyseur avantageusement trois voies, un filtre à particules logé à l'intérieur d'une enveloppe métallique, aussi appelée sous la dénomination anglaise de « canning », cette enveloppe métallique pouvant être commune au catalyseur et au filtre à particules.

Le filtre à particules d'une ligne d'échappement sert à la rétention de suies en son intérieur. Le principe de filtration est identique à celui d'un filtre à particules pour motorisation Diesel c'est-à-dire que la filtration est basée sur le passage des suies dans des canaux poreux.

Au bout d'une durée écoulée ou d'une certaine distance parcourue, un filtre à particules se retrouve chargé en particules, notamment en suies. Il faut alors le nettoyer ou le régénérer. Cette régénération passe par la combustion de ces suies. Pour brûler ces suies, le moteur peut passer dans un mode de combustion spécifique pour augmenter la température des gaz d'échappement environ jusqu'à 650°C pour brûler les suies, sans additif d'aide à la combustion des suies, dans le filtre à particules. Une régénération se passe donc sous température élevée en présence d'un apport d'oxygène.

Pour les moteurs thermiques à allumage commandé à carburant essence, ces conditions sont naturellement présentes pour une régénération passive qui est en fait quasi continue. Donc il n'y a en général pas de déclenchement de régénération en mode nominal dite régénération fonctionnelle. Il s'ensuit que pour un moteur thermique à carburant essence, une zone importante de fonctionnement du moteur permet d'apporter la thermique nécessaire et l'oxygène peut être apporté par des coupures d'injection lors de levers de pied ou lors des passages de rapport de vitesse. Tout cela apporte les conditions des régénérations passives.

Des stratégies ont toutefois été implémentées pour des conducteurs atypiques et une régénération dite dysfonctionnelle ou « active » serait déclenchée à partir d'environ 5 grammes de suies contenus dans le filtre à particules. Les conducteurs atypiques sont ceux qui font des parcours courts, par exemple de moins de 15 km, à vitesse peu élevée. Le mode de passage de vitesses et une conduite sportive ou non influent aussi sur la tenue des régénérations.

La masse de suies contenue dans le filtre à particules est à surveiller. Ceci peut être fait en contrôlant la différence de pression aux bornes du filtre à particules, de préférence avec une estimation du débit des gaz d'échappement dans le filtre à particules. Il est important que cette mesure se fasse aux bornes du filtre à particules et non pas entre quelque part en amont du filtre à particules et quelque part en aval du filtre à particules. Par contre, il se peut que cette mesure soit manquante pendant un bref instant du roulage ou connaisse des dispersions.

En effet, les éléments de dépollution dans le voisinage du filtre à particules essence, notamment le catalyseur trois voies, peuvent créer des dispersions et fausser les mesures de différence de pression et l'estimation de la masse de suies stockée dans le filtre à particules essence.

D'autres estimations peuvent se faire à partir des émissions de gaz en provenance du moteur dans sa ligne d'échappement. Ces estimations sont moins précises que celle basée sur un différentiel de pression mais peuvent compenser une estimation basée sur le différentiel de pression manquante. L'élaboration de modèles de combustion est possible pour ces estimations.

Comme l'utilisation du filtre à particules dans une motorisation à allumage commandé à essence est récente, il existe peu d'état de la technique relatif à des régénérations préventives d'un tel filtre à particules essence.

Le document FR-A-2 963 641 décrit un procédé pour lancer de manière ciblée la régénération d'un filtre à particules dans la ligne de gaz d'échappement d'un moteur thermique ayant un catalyseur en aval du filtre à particules. La régénération du filtre à particules se fait par combustion des particules au cours de la phase de régénération. D'autres procédés sont décrits dans les publications suivantes: WO 03/025355 A1, US 2017/159522 A1 et FR 2963641 A1.

Pour un moteur chaud, mais qui n'est pas encore à une température suffisante pour la régénération du filtre à particules, on intervient périodiquement pour augmenter la température des gaz d'échappement en amont du filtre à particules ou dans celui-ci. Ce procédé s'applique aux moteurs à essence mais ne donne aucune indication quant à l'estimation précise de la masse de suies et le suivi de la régénération.

Par conséquent, le problème à la base de l'invention est, pour un groupe motopropulseur comportant un moteur thermique à allumage commandé et une ligne d'échappement logeant un filtre à particules, d'estimer avec précision la charge en suies contenue dans le filtre de manière que les conditions d'une régénération dite dysfonctionnelle du filtre à particules puissent être optimales.

Pour atteindre cet objectif, il est prévu selon l'invention un procédé de lancement d'une régénération dysfonctionnelle d'un filtre à particules de ligne d'échappement de moteur thermique à allumage commandé équipant un véhicule automobile, la régénération dite dysfonctionnelle étant lancée quand une régénération dite fonctionnelle ou passive ne peut avoir lieu du fait d'un profil de roulage l'interdisant en n'atteignant pas une température de régénération minimale, en présentant une durée de roulage insuffisante ou en présentant un apport d'oxygène dans la ligne d'échappement insuffisant pour sa tenue, le procédé comprenant une étape d'identification d'un profil de roulage courant interdisant une régénération fonctionnelle ou passive, une étape d'estimation d'une masse de suies courante dans le filtre à particules et d'une charge courante du filtre à partir de la masse courante et, quand la charge courante est supérieure à un seuil minimal, une étape de modification des paramètres de combustion pour une obtention d'une température dans la ligne supérieure à 600°C et une masse d'oxygène dans la ligne au moins supérieure à 2% de la masse totale des gaz afin d'effectuer la régénération dysfonctionnelle, caractérisé en ce que l'étape d'estimation se fait en fonction simultanément de trois estimations de masses à partir, premièrement, d'une mesure d'un différentiel de pression aux bornes du filtre à particules, secondement, d'une estimation des émissions du moteur depuis la dernière régénération avec prise en compte d'une estimation de combustion naturelle des suies depuis la dernière régénération et, troisièmement, d'une estimation des émissions du moteur prises isolément à laquelle on applique un facteur multiplicatif prédéterminé de sécurité supérieur à 1 et, quand une mesure du différentiel de pression est disponible, la deuxième estimation est recalée par rapport au moins à la première estimation.

L'effet technique est de remplir les conditions de lancement d'une régénération dysfonctionnelle, aussi dénommée régénération préventive, par adaptation d'au moins un paramètre de combustion après détection d'une charge de suies dans le filtre à particules au-dessus d'un seuil intermédiaire. L'estimation de la charge de suies se fait par trois processus d'estimations en parallèle. La première estimation qui est la plus fiable par différentiel de pression n'est en effet pas toujours disponible et est alors remplacée par l'une des autres estimations. De plus, de fausses mesures peuvent être parfois délivrées par cette première estimation par des trop grandes dispersions et des perturbations des mesures par des éléments se trouvant à proximité du filtre à particules.

Cela permet de recaler les estimations l'une par rapport à l'autre, la deuxième estimation, moins précise car basée sur les émissions de gaz d'échappement dans la ligne d'échappement étant recalées au moins par rapport à la première estimation et, le cas échéant, la troisième estimation, celle-ci représentant une sécurité de protection du filtre à particules. Ainsi, pour l'estimation de la charge qui est une étape essentielle de la présente invention afin de ne pas lancer de régénération dysfonctionnelle inutile ou au contraire pour lancer une régénération dysfonctionnelle sans attendre une charge élevée de suies dans le filtre, cette estimation est basée sur trois estimations en parallèle. Ceci permet une comparaison des modèles de chacune des trois estimations et de les corriger.

Lors de la régénération dysfonctionnelle, la combustion dans le moteur sera peut-être dégradée vis-à-vis d'une combustion optimale mais cette ou ces mesures d'adaptation sont un levier fort pour le lancement de la régénération en accroissant la température et l'apport d'oxygène dans la ligne d'échappement contenant le filtre à particules.

Avantageusement, la régénération dysfonctionnelle du filtre à particules est effectuée si des conditions d'autorisation sont remplies et des conditions d'interdiction sont levées, les conditions d'autorisation étant une charge courante comprise entre le seuil minimal et un seuil maximal présentant un risque d'endommagement du filtre lors de la régénération, une mise en oeuvre de l'étape de modification des paramètres de combustion avec une température du moteur supérieure à une température minimale prédéterminée et une durée de roulage supérieure à une durée minimale, les conditions d'interdiction étant levées si le véhicule a parcouru une distance minimale depuis la dernière régénération effectuée.

Il faut en effet que la température dans la ligne d'échappement soit suffisamment élevée pour lancer une régénération dysfonctionnelle. En effet, cela permettra de moins dégrader la combustion dans le moteur et donc de diminuer la consommation de carburant. La condition d'interdiction concernant un kilométrage minimal entre deux régénérations permet de ne pas enchaîner les régénérations à la suite les unes des autres.

Avantageusement, la charge courante est obtenue en fonction de la masse courante que divise un volume interne du filtre à particules.

Avantageusement, les paramètres de combustion modifiés sont, pris unitairement ou en combinaison, un sous calage d'une avance à l'allumage entraînant une augmentation de la température des gaz d'échappement dans la ligne, des coupures ou des modifications d'injection de carburant dans le moteur avec une richesse inférieure à un pour un apport d'oxygène dans la ligne.

Les adaptations peuvent être faites simultanément ou successivement. Par exemple l'augmentation de température dans la ligne peut se faire avant un apport d'oxygène. Comme tout est automatique, le conducteur d'un véhicule n'a pas à se préoccuper de lancer la régénération dysfonctionnelle, il peut seulement s'apercevoir qu'une telle régénération est en cours et ne pas arrêter le véhicule pendant la régénération pour la rendre complète mais ceci n'est pas obligatoire. Lors d'une modification du sous-calage d'une telle avance à l'allumage, la dégradation du mode de combustion est à peine perceptible, notamment dans un véhicule roulant.

Avantageusement, une temporisation est observée entre une estimation d'une charge courante autorisant une régénération dysfonctionnelle et le lancement de la régénération dysfonctionnelle. Ceci permet une adaptation d'un ou de paramètres de combustion concernant notamment la montée en température de la ligne d'échappement et du filtre à particules.

Avantageusement, pendant la régénération dysfonctionnelle, la masse courante est suivie par les deuxième et troisième estimations et il est estimé un facteur de progression de la régénération dysfonctionnelle basé sur une détermination d'une masse finale cible et, quand cette masse finale cible est atteinte, le facteur de progression est égal à un et, quand le moteur est arrêté avant la fin de la régénération dysfonctionnelle, le facteur de progression est mémorisé avec, quand ce facteur dépasse un seuil minimal de progression, une qualification de régénération dysfonctionnelle comme suffisante.

Le facteur de progression permet de suivre l'évolution d'une régénération et sert de repère lors d'un arrêt de la régénération dysfonctionnelle lors d'un arrêt du moteur du véhicule, éventuellement pour une reprise de cette régénération au prochain démarrage.

Avantageusement, à la fin d'une régénération dysfonctionnelle complète ou suffisante, les estimations de masses de suies des première et troisième estimations sont mises en jour par rapport à la valeur donnée par la deuxième estimation de masse de suies. L'estimation par différentiel de pression peut alors avoir été faussée alors que l'estimation par les émissions remise à zéro est relativement fiable au tout début d'une estimation de charge en suies du filtre à particules.

Avantageusement, lors d'un arrêt du véhicule, pour un facteur se trouvant en dessous du seuil minimal de progression, la régénération dysfonctionnelle est reprise au prochain redémarrage du moteur dès que des conditions d'autorisation sont remplies et que des conditions d'interdiction sont levées.

Avantageusement, le profil de roulage courant suivi du véhicule est comparé ou anticipé avec des profils de roulage identifiés pour ne pas permettre d'effectuer régulièrement des régénérations complètes et si le profil de roulage courant du véhicule correspond à un des profils de roulage mémorisés ou s'il est anticipé être défavorable à une tenue d'une régénération, une régénération dysfonctionnelle est lancée.

Le suivi des historiques de roulage peut servir à anticiper le profil de roulage d'un véhicule en déclenchant une régénération dysfonctionnelle. Une telle régénération dysfonctionnelle est aussi appelée préventive car se faisant à un seuil intermédiaire de charge de suies étant inférieur au seuil maximal de charge du filtre à particules. Selon le suivi, il est reconnu que le véhicule présente un profil de roulage défavorable aux régénérations se tenant spontanément ou prévues pour une charge de suies maximale dans le filtre et que donc il est avantageux de déclencher des régénérations dysfonctionnelles à une moindre charge de suies que la charge de suies maximale.

Ceci peut être affiné en comparant le profil de roulage en cours avec les précédents roulages. Il peut alors être constaté que le profil de roulage en cours ne va pas permettre une régénération spontanée et que donc il convient de déclencher une régénération préventive.

L'invention concerne un groupe motopropulseur de véhicule automobile comprenant un moteur thermique à allumage commandé , une ligne d'échappement, une unité de contrôle commande en charge du fonctionnement du moteur thermique et une unité de supervision du filtre à particules déclenchant une régénération du filtre à particules pour une charge de particules de suies dans le filtre supérieure à un seuil minimal de charge prédéterminé, la ligne d'échappement comprenant un capteur de différentiel de pression aux bornes du filtre à particules, caractérisé en ce qu'il comprend des moyens de mise en oeuvre d'un tel procédé de lancement d'une régénération dysfonctionnelle, l'unité de contrôle commande comprenant des premiers moyens d'estimation d'une masse de suies en fonction du différentiel de pression relevé par le capteur aux bornes du filtre, des deuxièmes moyens d'estimation d'une masse de suies en fonction des émissions du moteur depuis la dernière régénération avec prise en compte d'une estimation de combustion naturelle des suies depuis la dernière régénération et des troisièmes moyens d'estimation d'une masse de suies en fonction des émissions du moteur prises isolément avec des moyens de détermination d'un facteur multiplicatif de sécurité ainsi que des moyens de comparaison des trois estimations effectuées et des moyens de recalage de la deuxième estimation au moins sur la première estimation.

Pour assurer plus de sécurité pour la protection du filtre à particules, il est possible aussi de recaler la deuxième estimation par rapport à la troisième estimation qui est plus sécuritaire avec un facteur multiplicatif prédéterminé de sécurité supérieur à 1, ceci en complément du recalage par rapport à la première estimation. Ceci peut aller dans le sens d'une augmentation de l'estimation d'une masse de suies. Un facteur de correction de la première estimation par la troisième peut être mis en œuvre.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un ensemble d'un moteur thermique atmosphérique à allumage commandé et d'une ligne d'échappement comportant un catalyseur trois voies et un filtre à particules, un tel ensemble pouvant mettre en œuvre le procédé selon la présente invention,
- la figure 2 est un logigramme d'un mode de réalisation d'un procédé de lancement d'une régénération dysfonctionnelle d'un filtre à particules essence intégré à une ligne d'échappement de moteur thermique à allumage commandé d'un véhicule automobile selon la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

On entend par groupe motopropulseur le moteur thermique et tous ses éléments auxiliaires comme une ligne d'échappement, une unité de contrôle commande en charge du bon fonctionnement du moteur et du contrôle de la dépollution dans la ligne d'échappement, le groupe motopropulseur pouvant comporter ou non un turbocompresseur.

Par filtre à particules essence, on entend tout filtre à particules pour un moteur à allumage commandé, notamment pour moteur à carburant essence ou à mélange contenant de l'essence. Cette dénomination est communément acceptée pour l'opposer à un filtre à particules pour un moteur à allumage par compression, notamment moteur Diesel ou fonctionnant au gazole mais ne doit pas être prise dans son sens restrictif réduit à un carburant essence.

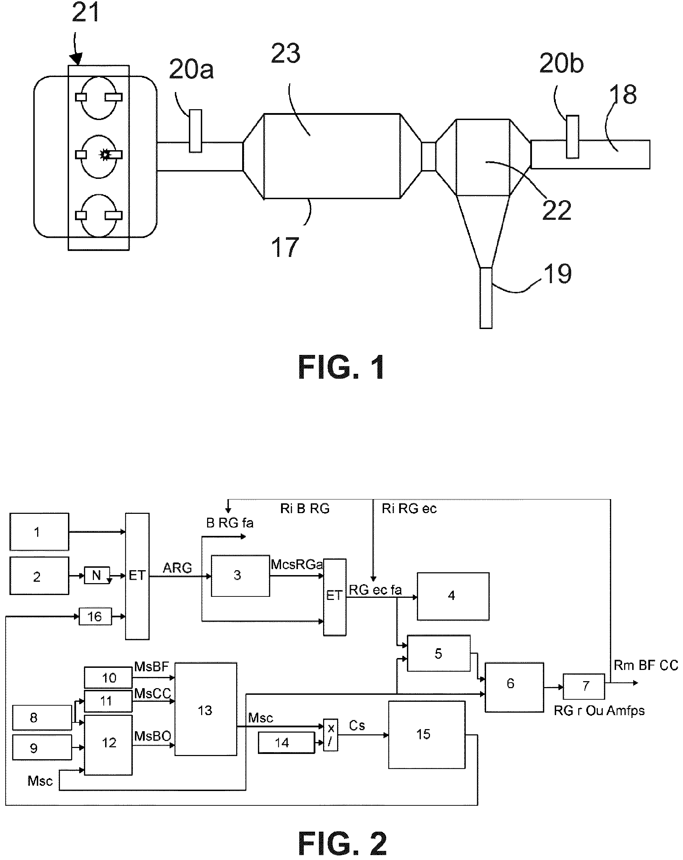

En se référant notamment à la figure 1, qui montre un moteur 21 et une ligne 18 d'échappement pouvant mettre en œuvre le procédé selon la présente invention bien que le moteur 21 et la ligne 18 ne soient pas montrés avec des caractéristiques spécifiques de mise en œuvre de la présente invention, l'invention concerne un procédé de lancement de régénération préventive d'un filtre 22 à particules essence dans un groupe motopropulseur comprenant un moteur 21 thermique et une ligne 18 d'échappement intégrant le filtre 22.

Une charge en suies du filtre 22 est mesurée ou estimée, par exemple par mesure d'un différentiel de pression aux bornes du filtre 22 ou en estimant les émissions dans la ligne 18 d'échappement depuis une dernière régénération et en tenant compte de régénérations spontanées ayant entraîné une combustion de suies dans le filtre 22. La charge en vigueur dans le filtre 22 ne doit pas dépasser un seuil maximal de charge prédéterminé.

La figure 1 montre aussi une enveloppe 17 métallique respective pour un catalyseur trois voies 23 et le filtre 22 à particules dont seule est référencée 17 l'enveloppe pour le catalyseur trois voies 23. Il est montré un capteur 19 de différentiel de pression ou de contre-pression aux bornes du filtre 22 à particules et une sonde à oxygène en amont 20a du catalyseur trois voies 23 et une sonde à oxygène en aval 20b du filtre 22 à particules. Tous les éléments nouvellement mentionnés ne sont pas essentiels pour la mise en œuvre de la présente invention sauf le capteur 19.

La présente invention concerne un procédé de lancement d'une régénération dysfonctionnelle d'un filtre 22 à particules essence intégré à une ligne 18 d'échappement de moteur 21 thermique allumage commandé d'un véhicule automobile. Une telle régénération dysfonctionnelle est lancée quand une régénération fonctionnelle ou passive ne peut avoir lieu du fait d'un profil de roulage défavorable.

Par régénération fonctionnelle, il est entendu une régénération se produisant quand la charge en suies dans le filtre 22 est proche du seuil maximal de charge de suies et par régénération passive, il est entendu une régénération spontanée qui se produit pour un moteur 21 à allumage commandé dans certaines conditions d'obtention moins sévère que les conditions de régénération en motorisation Diesel.

Une régénération passive ou spontanée peut ne pas se produire quand il n'est pas atteint une température de régénération minimale dans la ligne 18 d'échappement ou quand une durée de roulage insuffisante a été effectuée. Cette durée de roulage peut être insuffisante pour atteindre une température de régénération. Dans un autre cas, le manque d'un apport d'oxygène dans la ligne 18 d'échappement peut interdire ou faire échouer une régénération.

Le procédé selon la présente invention comprend une étape d'identification d'un profil de roulage courant interdisant une régénération fonctionnelle ou passive. Dans ce cas, il convient de lancer une régénération dysfonctionnelle avant que le filtre 22 à particules ne soit trop rempli de suies, étant donné l'impossibilité de le régénérer par une régénération passive ou fonctionnelle.

Il est prévu une étape d'estimation d'une masse de suies courante dans le filtre 22 à particules et d'une charge courante Cs du filtre 22 à partir de la masse courante Msc. Quand la charge courante Cs est supérieure à un seuil minimal ou seuil intermédiaire, en tout cas inférieure à une charge maximale de suies dans le filtre 22 à particules pouvant l'endommager lors d'une régénération, il est prévu une étape de modification des paramètres de combustion McsRGa pour une obtention d'une température dans la ligne 18 supérieure à 600°C et une masse d'oxygène dans la ligne 18 au moins supérieure à 2% de la masse totale des gaz afin d'effectuer la régénération dysfonctionnelle.

Pour une régénération dysfonctionnelle, il n'est pas attendu des conditions spécifiques favorisant une régénération, comme pour une régénération spontanée mais ces conditions sont provoquées comme pour une régénération fonctionnelle.

En se référant à la figure 2, tout en prenant en compte les références de la figure 1, l'étape d'estimation se fait en fonction simultanément de trois estimations 10 à 12 de masses à partir, premièrement, d'une mesure 10 d'un différentiel de pression aux bornes du filtre 22 à particules donnant des estimations de masse de suies MsBF pour masse en boucle fermée.

Secondement, l'étape d'estimation se fait aussi en fonction d'une estimation 12 des émissions du moteur 21 depuis la dernière régénération avec prise en compte d'une estimation de combustion naturelle des suies depuis la dernière régénération donnant des estimations de masse de suies MsBO pour masse en boucle ouverte.

Troisièmement, l'étape d'estimation se fait enfin en fonction d'une estimation 11 des émissions du moteur 21 prises isolément à laquelle on applique un facteur multiplicatif prédéterminé de sécurité supérieur à 1, avantageusement par exemple égal à 1,3, cette troisième estimation 11 donnant des estimations de masse de suies MsCC pour masse en boucle ouverte de conditions critiques, assurant la protection du filtre à particules pour des conditions de roulage défavorables.

Cette troisième estimation 11 a la fonction d'un mode sécuritaire dit pour conditions critiques de roulage. Quand une mesure du différentiel de pression par la première estimation 10 est disponible, la deuxième estimation 12 est recalée par rapport au moins à la première estimation 10 à partir de la mesure du différentiel. Ceci est montré à la référence 13.

En complément du recalage par rapport à la première estimation 10, la deuxième estimation 12 peut recalée par rapport à la troisième estimation 11 pour plus de sécurité, dans le sens d'une augmentation de la masse MsBO déterminée par la deuxième estimation 12. Ainsi, la deuxième estimation 12 peut être recalée par rapport à la troisième estimation 11 avec le coefficient multiplicatif lorsque la masse de suies estimée par la troisième estimation dépasse un seuil calibré. A la sortie de ce recalage il est connu une masse de suies courante Msc.

La première estimation 10 donne une mesure de masse de suies MsBF car estimée être obtenue en boucle fermée. La deuxième estimation 12 donne une mesure de masse de suies MsBO car estimée être obtenue en boucle ouverte. La troisième estimation 11 donne une mesure de masse de suies en conditions critiques MsCC. Les deuxième et troisième estimations 12, 11 sont établies selon une estimation d'émission 8 avec pour la deuxième estimation 12 une estimation de combustion 9.

La régénération dysfonctionnelle du filtre 22 à particules peut être effectuée si des conditions d'autorisation 1 sont remplies et des conditions d'interdiction 2 sont levées. Les conditions d'autorisation 1 peuvent être une charge courante Cs comprise entre le seuil minimal et un seuil maximal présentant un risque d'endommagement du filtre 22 lors de la régénération ainsi qu'une mise en oeuvre de l'étape de modification des paramètres de combustion McsRGa avec une température du moteur 21 supérieure à une température minimale prédéterminée et une durée de roulage supérieure à une durée minimale.

Les conditions d'interdiction 2 peuvent être levées si le véhicule a parcouru une distance minimale depuis la dernière régénération effectuée, par exemple 20 km, ce qui n'est pas limitatif. La référence N à la figure 2 signifie que les conditions d'interdiction 2 sont levées. Une condition de température minimale peut aussi figurer dans le conditions d'interdiction 2 mais ceci n'est pas obligatoire.

La charge courante Cs peut être obtenue en fonction de la masse courante Msc que divise un volume interne 14 du filtre 22 à particules obtenu après une estimation du volume libre 14 dans le filtre 22 à particules. On obtient ainsi une charge en grammes par litre.

En 15, il est établi un diagnostic de franchissement des seuils de chargement pour l'autorisation d'une régénération. La charge courante Cs en suies peut être supérieure à un seuil prédéterminé minimal ou intermédiaire pour déclencher une régénération mais inférieure à un seuil prédéterminé maximal afin que la régénération n'endommage pas le filtre 22 à particules par un trop fort exotherme.

Pour ordre d'idée, sans que cela soit limitatif, le seuil prédéterminé minimal ou intermédiaire peut correspondre à une masse de 6 grammes avec une plage de variation de +/- 20% autour de cette valeur et le seuil prédéterminé maximal peut correspondre à une masse de suies de 15 à 20 grammes dans le filtre 22 à particules. Le seuil minimal peut être ainsi calibrable pour s'adapter au mieux au profil de roulage.

Par exemple, sans que cela soit limitatif, Par exemple, un filtre 22 à particules dans un véhicule ayant un historique défavorable à une tenue de régénérations du filtre 22 à particules avec des parcours courts inférieurs à 15 kilomètres, à vitesse réduite inférieure à 50 km/h et une conduite douce sans accélérations fortes inférieures à 2m/s², pourra se voir attribuer un seuil intermédiaire inférieur qu'un filtre 22 à particules dans le véhicule ayant un historique moins défavorable à une tenue de régénérations avec des parcours longs à vitesse élevée et une conduite sportive avec accélérations fortes.

Quand la régénération dysfonctionnelle est autorisée, une unité de contrôle commande du groupe motopropulseur, responsable du fonctionnement de la combustion dans le moteur 21 et du fonctionnement des éléments de dépollution présents dans la ligne 18 d'échappement, dont le filtre 22 à particules avec le lancement de régénérations, mémorise la masse de suies courante Msc. Ceci est fait en 5.

Parallèlement, les paramètres de combustion peuvent être modifiés, ce qui est référencé McsRGa. Ces paramètres de combustion peuvent être, pris unitairement ou en combinaison, un sous calage d'une avance à l'allumage entraînant une augmentation de la température des gaz d'échappement dans la ligne 18, des coupures ou des modifications d'injection de carburant dans le moteur 21 avec une richesse inférieure à un pour un apport d'oxygène dans la ligne 18. D'autres paramètres de combustion peuvent être aussi pris en considération.

Quand les conditions d'autorisation 1 sont remplies et les conditions d'interdiction 2 sont levées, ce qui correspond au ET de la figure 2, une régénération dysfonctionnelle est autorisée ARG. Lorsque la charge courante Msc en suies estimé atteint le seuil minimal et que les conditions de fonctionnement du moteur 21 le permettent, un superviseur du filtre 22 à particules envoie une demande de régénération dysfonctionnelle à un gestionnaire des modes de combustion qui peut être intégré à une unité de contrôle commande du groupe motopropulseur.

Le gestionnaire de mode pilote les actionneurs du moteur 21 afin de favoriser l'apport de thermique et d'oxygène dans la ligne 18 d'échappement en amont du filtre 22 à particules, nécessaires à la combustion des suies. Il est procédé en 3 à la gestion des modes de combustion McsRGa pour appliquer un mode de combustion spécifique à la régénération.

Une temporisation 16 peut être observée entre une estimation d'une charge courante Cs autorisant une régénération dysfonctionnelle et le lancement de la régénération dysfonctionnelle, ce qui vient en troisième condition après le premier groupe de conditions d'autorisation 1 et le deuxième groupe de conditions d'interdiction 2.

S'il existe un besoin de régénération figé à la première activation B RG fa, ce besoin de régénération vient en condition nécessaire avec le mode de combustion spécifique à la régénération McsRGa pour une régénération en cours figée à la première activation RG ec fa.

Pendant cette régénération dysfonctionnelle en cours, il est procédé à une inhibition de la première estimation 10 par différentiel de pression et des mises à jour pour la deuxième estimation 12 en fonction des émissions. Ceci est référencé en 4.

Lors de la régénération dysfonctionnelle en cours, après mémorisation de la masse de suies courante Msc, l'évolution de la masse courante Msc de suies peut être suivie par les deuxième et troisième estimations 12, 11. Il peut alors être estimé un facteur de progression de la régénération dysfonctionnelle basé sur une détermination d'une masse finale cible. Ceci est référencé 6 à la figure 2. Le facteur de progression permet de statuer sur l'état d'avancement de la régénération et de demander le retour aux modes de fonctionnement du moteur 21 nominaux lorsque la régénération est terminée.

Quand cette masse finale cible est atteinte, le facteur de progression est égal à un. La régénération dysfonctionnelle est alors complètement finie. Quand le moteur 21 est arrêté avant la fin de la régénération dysfonctionnelle, le facteur de progression est mémorisé. Dans le cas où ce facteur dépasse un seuil minimal de progression, une qualification comme suffisante est attribuée à la régénération dysfonctionnelle non complètement terminée.

Lors d'un arrêt du véhicule, pour un facteur de progression se trouvant en dessous du seuil minimal de progression, la régénération dysfonctionnelle est reprise au prochain redémarrage du moteur 21 dès que des conditions d'autorisation 1 sont remplies et que des conditions d'interdiction 2 sont levées.

La référence 7 symbolise l'attribution d'un facteur de progression à la régénération dysfonctionnelle. Quand la régénération est réussie RG r, le facteur de progression vaut 1. Un facteur de progression moindre peut être attribué à une régénération non finie par arrêt du moteur 21 Amfps, d'où la référence ou entre RG r et Amfps. Il est aussi procédé à la remise à zéro de l'information « régénération en cours » Ri RG ec et à la remise à zéro de l'information « besoin d'une régénération » Ri B RG vers le besoin de régénération figé à la première activation B RG fa.

Le facteur de progression permet de suivre l'évolution d'une régénération et sert de repère pour un arrêt de la régénération dysfonctionnelle lors d'un arrêt du véhicule, éventuellement pour une reprise de cette régénération au prochain démarrage.

A la fin d'une régénération dysfonctionnelle complète ou suffisante RG r Ou Amfps, les estimations de masses de suies des première 10 et troisième estimations 11 sont mises en jour par rapport à la valeur donnée par la deuxième estimation 12 de masse de suies. Ceci est référencé Rm BF CC, pour remise des masses de la première estimation 10 en boucle fermée et de la troisième estimation 11 pour conditions critiques.

Il est compréhensible que les régénérations dysfonctionnelles n'ont pas besoin d'être lancées pour tous les profils de roulage, une motorisation essence pouvant garantir fréquemment les conditions de régénérations passives ou fonctionnelles. Le procédé selon l'invention est réservé à des profils de roulage défavorisant fortement la tenue de régénérations.

Pour déterminer si le procédé selon l'invention s'applique ou non, il est suivi le profil de roulage courant du véhicule. Le profil de roulage courant suivi du véhicule peut ensuite être comparé avec ou anticipé par des profils de roulage identifiés pour ne pas permettre d'effectuer régulièrement des régénérations complètes. Si le profil de roulage courant du véhicule correspond à un des profils de roulage mémorisés ou s'il est anticipé être défavorable à une tenue d'une régénération, une régénération dysfonctionnelle est lancée.

L'invention concerne un groupe motopropulseur de véhicule automobile comprenant un moteur 21 thermique à allumage commandé, une ligne 18 d'échappement, une unité de contrôle commande en charge du fonctionnement du moteur 21 thermique et une unité de supervision du filtre 22 à particules, l'unité de supervision pouvant être intégrée dans l'unité de contrôle commande.

L'unité de supervision en association avec l'unité de contrôle commande du moteur 21 ou sous commande d'une unité de diagnostic de détection si une régénération est nécessaire, déclenche une régénération du filtre 22 à particules pour une charge de particules de suies dans le filtre 22 supérieure à un seuil minimal de charge prédéterminé, la ligne 18 d'échappement comprenant un capteur 19 de différentiel de pression aux bornes du filtre 22 à particules.

Selon l'invention, le groupe motopropulseur comprend des moyens de mise en œuvre d'un procédé de lancement d'une régénération dysfonctionnelle tel que précédemment décrit. L'unité de contrôle commande ou une unité de diagnostic comprend des premiers moyens d'estimation 10 d'une masse de suies MsBF en fonction du différentiel de pression relevé par le capteur 19 aux bornes du filtre 22, des deuxièmes moyens d'estimation 12 d'une masse de suies en fonction des émissions MsBO du moteur 21 depuis la dernière régénération avec prise en compte d'une estimation de combustion naturelle des suies depuis la dernière régénération et des troisièmes moyens d'estimation 11 d'une masse de suies en fonction des émissions MsCC du moteur 21 prises isolément avec des moyens de détermination d'un facteur multiplicatif de sécurité.

L'unité de contrôle commande comprend aussi des moyens de comparaison des trois estimations 10 à 12 effectuées et des moyens de recalage de la deuxième estimations 12 au moins sur la première estimation 10 et, le cas échéant, en complément par rapport à la troisième estimation 11. L'homme de métier a les compétences nécessaires de moduler le recalage de la deuxième estimation 12 se faisant principalement par rapport à la première estimation 10 par prise en compte de la troisième estimation 11.

L'invention n'est nullement limitée aux modes de réalisation décrits et illustrés qui n'ont été donnés qu'à titre d'exemples.

## Revendications

1. Procédé de lancement d'une régénération dysfonctionnelle d'un filtre (22) à particules de ligne (18) d'échappement de moteur (21) thermique à allumage commandé équipant un véhicule automobile, la régénération dite dysfonctionnelle étant lancée quand une régénération dite fonctionnelle ou passive ne peut avoir lieu du fait d'un profil de roulage l'interdisant en n'atteignant pas une température de régénération minimale, en présentant une durée de roulage insuffisante ou en présentant un apport d'oxygène dans la ligne (18) d'échappement insuffisant pour sa tenue, le procédé comprenant une étape d'identification d'un profil de roulage courant interdisant une régénération fonctionnelle ou passive, une étape d'estimation d'une masse de suies courante dans le filtre (22) à particules et d'une charge courante (Cs) du filtre (22) à partir de la masse courante (Msc) et, quand la charge courante (Cs) est supérieure à un seuil minimal, une étape de modification des paramètres de combustion (McsRGa) pour une obtention d'une température dans la ligne (18) supérieure à 600°C et une masse d'oxygène dans la ligne (18) au moins supérieure à 2% de la masse totale des gaz afin d'effectuer la régénération dysfonctionnelle, **caractérisé en ce que** l'étape d'estimation se fait en fonction simultanément de trois estimations (10 à 12) de masses à partir, premièrement, d'une mesure d'un différentiel de pression aux bornes du filtre (22) à particules, secondement, d'une estimation (12) des émissions du moteur (21) depuis la dernière régénération avec prise en compte d'une estimation de combustion naturelle des suies depuis la dernière régénération et, troisièmement, d'une estimation (11) des émissions du moteur (21) prises isolément à laquelle on applique un facteur multiplicatif prédéterminé de sécurité supérieur à 1 et, quand une mesure du différentiel de pression est disponible, la deuxième estimation (12) est recalée par rapport au moins à la première estimation (10).

2. Procédé de lancement selon la revendication précédente, dans lequel la régénération dysfonctionnelle du filtre (22) à particules est effectuée si des conditions d'autorisation (1) sont remplies et des conditions d'interdiction (2) sont levées, les conditions d'autorisation (1) étant une charge courante (Cs) comprise entre le seuil minimal et un seuil maximal présentant un risque d'endommagement du filtre (22) lors de la régénération, une mise en oeuvre de l'étape de modification des paramètres de combustion (McsRGa) avec une température du moteur (21) supérieure à une température minimale prédéterminée et une durée de roulage supérieure à une durée minimale, les conditions d'interdiction (2) étant levées si le véhicule a parcouru une distance minimale depuis la dernière régénération effectuée.

3. Procédé de lancement selon la revendication précédente, dans lequel la charge courante (Cs) est obtenue en fonction de la masse courante (Msc) que divise un volume interne (14) du filtre (22) à particules.

4. Procédé de lancement selon l'une quelconque des deux revendications précédentes, dans lequel les paramètres de combustion modifiés (McsRGa) sont, pris unitairement ou en combinaison, un sous calage d'une avance à l'allumage entraînant une augmentation de la température des gaz d'échappement dans la ligne (18), des coupures ou des modifications d'injection de carburant dans le moteur (21) avec une richesse inférieure à un pour un apport d'oxygène dans la ligne (18).

5. Procédé de lancement selon l'une quelconque des trois revendications précédentes, dans lequel une temporisation (16) est observée entre une estimation d'une charge courante (Cs) autorisant une régénération dysfonctionnelle et le lancement de la régénération dysfonctionnelle.

6. Procédé de lancement selon l'une quelconque des revendications précédentes, dans lequel, pendant la régénération dysfonctionnelle, la masse courante (Msc) est suivie par les deuxième et troisième estimations (12, 11) et il est estimé un facteur de progression (6) de la régénération dysfonctionnelle basé sur une détermination d'une masse finale cible et, quand cette masse finale cible est atteinte, le facteur de progression est égal à un et, quand le moteur (21) est arrêté avant la fin de la régénération dysfonctionnelle, le facteur de progression est mémorisé avec, quand ce facteur dépasse un seuil minimal de progression, une qualification de régénération dysfonctionnelle comme suffisante.

7. Procédé de lancement selon la revendication précédente, dans lequel, à la fin d'une régénération dysfonctionnelle complète ou suffisante (RG r Ou Amfps), les estimations de masses de suies des première et troisième estimations (10, 11) sont mises en jour par rapport à la valeur donnée par la deuxième estimation (12) de masse de suies.

8. Procédé de lancement selon l'une quelconque des deux revendications précédentes, dans lequel, lors d'un arrêt du véhicule, pour un facteur se trouvant en dessous du seuil minimal de progression, la régénération dysfonctionnelle est reprise au prochain redémarrage du moteur (21) dès que des conditions d'autorisation (1) sont remplies et que des conditions d'interdiction (2) sont levées.

9. Procédé de lancement selon l'une quelconque des revendications précédentes, dans lequel le profil de roulage courant suivi du véhicule est comparé ou anticipé avec des profils de roulage identifiés pour ne pas permettre d'effectuer régulièrement des régénérations complètes et si le profil de roulage courant du véhicule correspond à un des profils de roulage mémorisés ou s'il est anticipé être défavorable à une tenue d'une régénération, une régénération dysfonctionnelle est lancée.

10. Groupe motopropulseur de véhicule automobile comprenant un moteur (21) thermique à allumage commandé, une ligne (18) d'échappement, une unité de contrôle commande en charge du fonctionnement du moteur (21) thermique et une unité de supervision du filtre (22) à particules déclenchant une régénération du filtre (22) à particules pour une charge de particules de suies dans le filtre (22) supérieure à un seuil minimal de charge prédéterminé, la ligne (18) d'échappement comprenant un capteur (19) de différentiel de pression aux bornes du filtre (22) à particules, **caractérisé en ce qu'**il comprend des moyens de mise en œuvre d'un procédé de lancement d'une régénération dysfonctionnelle selon l'une quelconque des revendications précédentes, l'unité de contrôle commande comprenant des premiers moyens d'estimation (10) d'une masse de suies en fonction du différentiel de pression relevé par le capteur (19) aux bornes du filtre (22), des deuxièmes moyens d'estimation (12) d'une masse de suies en fonction des émissions du moteur (21) depuis la dernière régénération avec prise en compte d'une estimation de combustion naturelle des suies depuis la dernière régénération et des troisièmes moyens d'estimation (11) d'une masse de suies en fonction des émissions du moteur (21) prises isolément avec des moyens de détermination d'un facteur multiplicatif de sécurité ainsi que des moyens de comparaison des trois estimations (10 à 12) effectuées et des moyens de recalage de la deuxième estimation (12) sur au moins la première estimation (10).

## Patentansprüche

1. Verfahren zum Auslösen einer dysfunktionellen Regeneration eines Filters (22) zu Partikeln der Leitung (18) vom Motorabgas (21) zur thermischen Zündung, die ein Kraftfahrzeug ausstattet, wobei die als dysfunktional bezeichnete Regeneration eingeleitet wird, wenn eine Regeneration aufgerufen wird funktionell oder passiv kann nicht stattfinden, weil ein Fahrprofil es verhindert, indem es eine minimale Regenerationstemperatur nicht erreicht, eine unzureichende Fahrzeit aufweist oder indem eine Sauerstoffversorgung in der Leitung (18) nicht genügend Abgas für seine Leistung aufweist, wobei das Verfahren einen Schritt von umfasst Identifizieren eines Laufprofils, das eine funktionelle oder passive Regeneration verhindert, ein Schritt zum Schätzen einer im Partikelfilter (22) laufenden Rußmasse und einer Strombelastung (Cs) des Filters (22) aus der Strommasse (Msc) und, wenn die Die Stromlast (Cs) ist größer als ein Mindestschwellenwert. Dies ist ein Schritt zum Ändern der Verbrennungsparameter (McsRGa), um eine Temperatur in Leitung (18) von mehr als 600 °C zu erhaltenund eine Masse von Sauerstoff in der Leitung (18) zumindest größer als 2% der Gesamtmasse des Gases zur Wirkung Regenerations dysfunktionalen, charakterisiert in dass der Schritt des Schätzens erfolgt nach gleichzeitig drei Schätzwerten (10 bis 12) Massen aus zunächst eine Messung einer Druckdifferenz über den Partikelfilter (22), die zweite, die seit der letzten Regeneration unter Berücksichtigung eine Schätzung (12) der Motoremissionen (21) eine Schätzung der natürlichen Rußverbrennung seit der letzten Regeneration und drittens eine Schätzung (11) der Emissionen des Motors (21) für sich genommen, auf die ein vorbestimmter multiplikativer Faktor angewendet wird, Sicherheit größer als 1, und, wenn eine Messung der Druckdifferenz verfügbar ist, die zweite Schätzung (12) wird in Bezug auf mindestens die erste Schätzung (10) neu eingestellt.

2. Verfahren zum Starten gemäß dem vorhergehenden Anspruch, wobei die dysfunktionale Regeneration des Partikelfilters (22) durchgeführt wird, wenn die Zulassungsbedingungen (1) erfüllt sind und die Verbotsbedingungen (2) aufgehoben werden, wobei die Zulassungsbedingungen (1) eine aktuelle Last sind (Cs) zwischen der minimalen Schwelle und einer maximalen Schwelle, die ein Risiko einer Beschädigung des Filters (22) während der Regeneration darstellen, eine Implementierung des Schritts des Modifizierens der Verbrennungsparameter (McsRGa) mit einer Motortemperatur (21), die größer als eine vorbestimmte minimale Temperatur ist und eine Fahrzeit von mehr als einer Mindestdauer, wobei die Verbotsbedingungen (2) aufgehoben werden, wenn das Fahrzeug seit der letzten durchgeführten Regeneration eine Mindeststrecke zurückgelegt hat.

3. Verfahren zum Starten gemäß dem vorhergehenden Anspruch, bei dem die Stromladung (Cs) als Funktion der Strommasse (Msc) geteilt durch ein Innenvolumen (14) des Partikelfilters (22) erhalten wird.

4. Verfahren zum Starten gemäß einem der beiden vorhergehenden Ansprüche, bei dem die modifizierten Verbrennungsparameter (McsRGa) einzeln oder in Kombination eine Untersteuerung eines Zündvorschubs sind, die zu einer Erhöhung der Temperatur der Gase führt. Abgas in der Leitung (18), Unterbrechungen oder Änderungen der Kraftstoffeinspritzung im Motor (21) mit einem Gehalt von weniger als eins für eine Sauerstoffversorgung in der Leitung (18).

5. Verfahren zum Starten gemäß einem der drei vorhergehenden Ansprüche, bei dem eine Zeitverzögerung (16) zwischen einer Schätzung einer Stromlast (Cs), die eine dysfunktionale Regeneration ermöglicht, und dem Start der dysfunktionellen Regeneration beobachtet wird.

6. Verfahren zum Starten gemäß einem vorhergehenden Anspruch, wobei während der dysfunktionellen Regeneration der laufenden Masse (Msc) die zweite und dritte Schätzung (12, 11) folgt und ein Fortschrittsfaktor (6) der dysfunktionellen Regeneration basierend auf einer Bestimmung geschätzt wird einer endgültigen Zielmasse und wenn diese endgültige Zielmasse erreicht ist, ist der Fortschrittsfaktor gleich eins, und wenn der Motor (21) vor dem Ende der dysfunktionellen Regeneration gestoppt wird, wird der Fortschrittsfaktor mit gespeichert, wenn dieser Faktor überschreitet eine minimale Progressionsschwelle, eine Qualifikation der dysfunktionellen Regeneration als ausreichend.

7. Verfahren zum Starten gemäß dem vorhergehenden Anspruch, bei dem am Ende einer vollständigen oder ausreichenden dysfunktionellen Regeneration (RG r Ou Amfps) die Rußmassenschätzungen der ersten und dritten Schätzung (10, 11) in Bezug auf aktualisiert werden der Wert, der durch die zweite Schätzung (12) der Rußmasse gegeben ist.

8. Verfahren zum Starten gemäß einem der beiden vorhergehenden Ansprüche, bei dem beim Anhalten des Fahrzeugs für einen Faktor, der unter der minimalen Fortschrittsschwelle liegt, die dysfunktionale Regeneration beim nächsten Neustart des Motors (21) wieder aufgenommen wird wenn die Zulassungsbedingungen (1) erfüllt sind und die Verbotsbedingungen (2) aufgehoben werden.

9. Verfahren zum Starten gemäß einem vorhergehenden Anspruch, wobei das Laufprofil Stromüberwachung des Fahrzeugs mit identifizierten oder erwarteten Walzprofilen verglichen wird nicht so dass regelmäßig durchführt vollständige Regeneration und wenn das Profil Strom Fahren des Fahrzeug entspricht eine von den gespeicherten Fahrprofilen oder wenn zu erwarten ist, dass eine durchzuführende Regeneration ungünstig ist, wird eine dysfunktionale Regeneration eingeleitet.

10. Ein Kraftfahrzeugantriebsstrang, der einen Motor (21) umfasst, der Wärme zum Zünden, eine Leitung (18) zum Ablassen, eine Befehls und Steuereinheit, die für den Betrieb des Motors (21) verantwortlich ist, und eine Wärmeüberwachungseinheit Filter (22) Partikel, die eine Regeneration auslösen des Partikelfilters (22) für eine Last von Rußpartikeln in dem Filter (22), die größer als eine vorbestimmte Mindestlastschwelle ist, wobei die Abgasleitung (18) einen Sensor (19) der Druckdifferenz über die Anschlüsse des Partikelfilters (22), **dadurch gekennzeichnet, dass** es Mittel zum Implementieren eines Verfahrens zum Auslösen einer dysfunktionellen Regeneration gemäß einem der vorhergehenden Ansprüche umfasst, wobei die Steuereinheit ein erstes Mittel zum Schätzen (10) einer Rußmasse als Funktion des Differenzdrucks umfasst Ablesen vom Sensor (19) über den Filter (22), zweites Mittel zur Schätzung (12) einer Rußmasse als Funktion der Emissionen des Motors (21) seit der letzten Regeneration unter Berücksichtigung einer Schätzung der natürlichen Verbrennung des Rußes seit der letzten Regeneration und des dritten Mittels zur Schätzung (11) einer Rußmasse als Funktion der Motoremissionen (21) isoliert mit Mitteln zur Bestimmung eines Multiplikationssicherheitsfaktors sowie Mitteln zum Vergleich der drei vorgenommenen Schätzungen (10 bis 12) und Mitteln zum Zurücksetzen der zweiten Schätzung (12) auf mindestens minus die erste Schätzung (10).

## Claims

1. Method of initiating a dysfunctional regenerating a filter (22) to particles of line (18) from engine exhaust (21) to thermal ignition equipping a motor vehicle, the regeneration called dysfunctional being initiated when a regeneration called functional or passive cannot take place due to a driving profile preventing it by not reaching a minimum regeneration temperature, by having insufficient driving time or by presenting an oxygen supply in the line (18) insufficient exhaust for its performance, the method comprising a step of identifying a running profile preventing functional or passive regeneration, a step of estimating a mass of soot running in the particulate filter (22) and a current load (Cs) of the filter (22) from the current mass (Msc) and, when the current load (Cs) is greater than a minimum threshold, a step of modifying the combustion parameters (McsRGa) for obtaining a temperature in line (18) greater than 600° and a mass of oxygen in the line (18) at least greater than 2% of the total mass of gas to effect regeneration dysfunctional, **characterized in that** the estimation step is done as a function simultaneously of three estimations (10 to 12) of masses from, firstly, a measurement of a pressure differential across the particulate filter (22), secondly , of an estimate (12) of the engine emissions (21) since the last regeneration taking into account an estimate of natural soot combustion since the last regeneration and, third, an estimate (11) of the emissions of the engine (21) taken in isolation to which a predetermined multiplicative factor is applied safety greater than 1 and, when a measurement of the pressure differential is available, the second estimate (12) is readjusted with respect to at least the first estimate (10).

2. Method of launching according to the preceding claim, wherein the dysfunctional regeneration of the particulate filter (22) is carried out if authorization conditions (1) are met and prohibition conditions (2) are lifted, the authorization conditions (1) being a current load (Cs) between the minimum threshold and a maximum threshold presenting a risk of damage to the filter (22) during regeneration, an implementation of the step of modifying the combustion parameters (McsRGa) with an engine temperature (21) greater than a predetermined minimum temperature and a driving time greater than a minimum duration, the prohibition conditions (2) being lifted if the vehicle has traveled a minimum distance since the last regeneration carried out.

3. Method of launching according to the preceding claim, in which the current charge (Cs) is obtained as a function of the current mass (Msc) divided by an internal volume (14) of the particle filter (22).

4. Method of launching according to any one of the two preceding claims, in which the modified combustion parameters (McsRGa) are, taken individually or in combination, an under-timing of an ignition advance leading to an increase in the temperature of the gases. exhaust in the line (18), cuts or modifications of fuel injection in the engine (21) with a richness lower than one for an oxygen supply in the line (18).

5. Method of launching according to any one of the three preceding claims, in which a time delay (16) is observed between an estimate of a current load (Cs) allowing a dysfunctional regeneration and the launching of the dysfunctional regeneration.

6. Method of launching according to any preceding claim, wherein during dysfunctional regeneration the running mass (Msc) is followed by the second and third estimates (12, 11) and a progression factor (6) is estimated of the dysfunctional regeneration based on a determination of a final target mass and, when this final target mass is reached, the progression factor is equal to one and, when the engine (21) is stopped before the end of the dysfunctional regeneration, the progression factor is stored with, when this factor exceeds a minimum progression threshold, a qualification of dysfunctional regeneration as sufficient.

7. Method of launching according to the preceding claim, in which, at the end of a complete or sufficient dysfunctional regeneration (RG r Ou Amfps), the soot mass estimates of the first and third estimates (10, 11) are updated, with respect to the value given by the second estimate (12) of the mass of soot.

8. Method of launching according to any one of the two preceding claims, in which, when the vehicle is stopped, for a factor lying below the minimum threshold of progression, the dysfunctional regeneration is resumed the next time the engine (21) is restarted. as soon as authorization conditions (1) are fulfilled and prohibition conditions (2) are lifted.

9. Method of launching according to any one of the preceding claims, wherein the running profile current monitoring of the vehicle is compared with identified or anticipated rolling profiles for not allowing regularly perform complete regeneration and if the profile current driving of the vehicle corresponds to one of the stored driving profiles or if it is anticipated to be unfavorable for a regeneration to be carried out, a dysfunctional regeneration is initiated.

10. A motor vehicle powertrain comprising an engine (21) heat to ignition, a line (18) to exhaust, a command and control unit in charge of operating the engine (21) and a thermal monitoring unit filter (22) particulate matter triggering regeneration of the particulate filter (22) for a load of soot particles in the filter (22) greater than a predetermined minimum load threshold, the exhaust line (18) comprising a sensor (19) of pressure differential across the terminals of the particle filter (22), **characterized in that** it comprises means for implementing a method for initiating a dysfunctional regeneration according to any one of the preceding claims, the unit of control command comprising first means for estimating (10) a mass of soot as a function of differential pressure reading from the sensor (19) across the filter (22), second means of estimation (12) of a mass of soot s as a function of the emissions of the engine (21) since the last regeneration, taking into account an estimate of the natural combustion of the soot since the last regeneration and the third means of estimating (11) a mass of soot as a function of the engine emissions (21) taken in isolation with means for determining a multiplicative safety factor as well as means for comparing the three estimates (10 to 12) made and means for resetting the second estimate (12) on at least the first estimate (10).
